Europäisches Patentamt

European Patent Office

Office européen des brevets

(11) Publication number : **0 468 693 A2**

# (12) EUROPEAN PATENT APPLICATION

(21) Application number : **91306501.7**

(22) Date of filing : **17.07.91**

(51) Int. Cl.⁵ : **G01N 21/07, B04B 5/04**

(30) Priority : **24.07.90 US 556776**

(43) Date of publication of application :
**29.01.92 Bulletin 92/05**

(84) Designated Contracting States :
**CH DE FR GB IT LI**

(71) Applicant : **BECKMAN INSTRUMENTS, INC.**
**2500 Harbor Boulevard Box 3100**
**Fullerton California 92634-3100 (US)**

(72) Inventor : **Wright, Herschel Eugene**
**2225 Church Avenue**
**Gilroy, California 95020 (US)**

(74) Representative : **Ede, Eric et al**
**Fitzpatricks 4 West Regent Street**
**Glasgow G2 1RS (GB)**

(54) **Self-compensating seal in a centrifugal field.**

(57) A self-compensating seal in a centrifuge field
formed by an open-ended strip (50) of com-
pliant material which is compressible longitudi-
nally under centrifugal forces to thereby expand
laterally against the interfacing surfaces to be
sealed. The sealing pressure increases when
centrifugal force increases.

*FIG. 3*

EP 0 468 693 A2

## BACKGROUND OF THE INVENTION

### 1. Field of the Invention

The present invention relates to sealing interfacing surfaces of structural members which are subject to centrifugal forces, and more particularly to forming a self-compensating seal which varies sealing pressure in accordance with the magnitude of the centrifugal forces.

### 2. Description of Related Art

Seals are required for some of the components of a system which are subject to a centrifugal field. For example, analytical rotors for use in analytical centrifuges require one or more seals for fluid containment. By way of background, analytical centrifuges are used to study the distribution of macromolecules in solution under the influence of a centrifugal field. Rotors for use with such centrifuges have one or more chambers near the periphery for receiving cells containing samples to be centrifuged and to be examined during the centrifuging action. Such rotors are typically provided with an even number of diametrically opposite chambers for symmetry to prevent unbalance during the rotation of rotor. The chambers are cylindrical with axis parallel to the axis of rotation of the rotor. The cells have sector-shaped compartments each defined by a centerpiece and windows to hold samples. The compartments are aligned parallel to the rotor axis. An example of a sample cell for an analytical rotor has been described in U.S. Patent No. 3,778,171 which has been assigned to the assignee of the present invention.

A dilute solution of a sample of the macromolecule to be analyzed is placed in one compartment of a cell and solvent is placed in another compartment to serve as a reference material, typically next to the sample compartment in the same cell. Changes in the distribution of the sample in the compartment under the influence of high centrifugal forces are followed by measuring the resulting changes in the physical characteristics of the sample solution.

One very useful technique for determining properties, such as concentration distribution, of a sample material in solution in a centrifuge is to pass a beam of light through the solution and measure the antenuation (absorption) of the light. The variation in the absorption intensity of the centrifuged sample may be measured or monitored as the heavier material in the sample is thrown radially away from the rotor axis during the rapid rotation of the centrifuge rotor. Various techniques for optical visualization of the sample compartment have been discussed in U.S. Patent Nos. 4,921,350; 4,919,537; 3,807,874 and 3,968,557 which have been commonly assigned to the assignee of the present invention.

For so called ultracentrifuges, the analytical rotors may be rotated in excess of 60,000 rotations per minute to impose in excess of 400,000 g (g = earth's gravitation force unit) centrifugal force on the fluids in the sample cells. In the past, the interfacing surfaces of the structural members defining the sample compartments have been sealed against fluid leakage using o-rings, washers and the like gaskets. However, at high rotations and g-forces the pressure of the fluids under the high centrifugal forces can cause often the fluids to leak pass the seal. It has also been found that imperfections in the finish of the interfacing sealing surfaces, such as scratches, will result in leakage under high centrifugal forces. Misalignment in the assembly of the structural components of the sample cell, for example, between the window and the centerpiece which define the fluid compartments, may also result in leakage. Moreover, under high centrifugal forces, the high fluid pressure built up in the fluid compartments may cause the window to bow which will result in fluid leakage between adjacent compartments.

## SUMMARY OF THE INVENTION

The present invention is directed to a novel means of sealing interfacing surfaces of two structural members in a centrifuge field wherein the seal is subject to a component of a centrifugal force in the plane of the interfacing surfaces. The seal is formed by an open-ended strip of compliant member, i.e. not close-looped like an o-ring. The compliant member forms a seal upon centrifugation wherein the sealing force is commensurated with the centrifugal force. In particular, upon centrifugation, the material of the compliant member flows longitudinally and is compressible in the direction of the component of the centrifugal force. As a result, the compliant member expands laterally to increase the sealing pressure on the interfacing surfaces. As centrifugal forces increase with increases in rotor speed, the sealing pressure increases as well thereby forming a tighter seal. The tighter seal can withstand the higher hydrostatic pressure which occurs as a result of increased centrifugal forces on the fluid being centrifuged. Effectively, a tight seal is automatically provided during high speed centrifugation to oppose the large hydrostatic pressure.

The seal can be utilized in connection with a sample cell in an analytical rotor. The seal is placed between the interfacing surfaces of the window and the sample cell centerpiece which define the fluid compartments for holding samples. The seal can be of a U-shaped or W-shaped configuration to substantially surround the perimeter of the cell compartments at the interface, with the open-ended portion of the seal located closest to the spin axis. Upon centrifugation, the compliant material of the seal "flows" outwards along the direction of the component of the centrifugal force thereby expanding laterally to increase the sealing pressure on the interfacing surfaces of the window and the sample cell centerpiece.

## BRIEF DESCRIPTION OF THE DRAWINGS

Fig. 1 is a perspective view of an analytical rotor.

Fig. 2 is an exploded view of a sample cell incorporating a seal in accordance with one embodiment of the present invention.

Fig. 3 is a top view of a dual compartment sample cell centerpiece showing the W-shaped seal configuration.

Fig. 4 is a sectional view taken along line 4-4 in Fig. 3.

Fig. 5 is a top view of a single compartment sample cell centerpiece showing the U-shaped seal configuration.

## DESCRIPTION OF ILLUSTRATED EMBODIMENTS

The following description is of the best presently contemplated mode of carrying out the invention. This description is made for the purpose of illustrating the general principles of the invention and should not be taken in a limiting sense. The scope of the invention is best determined by reference to the appended claims.

The present invention will be described using the example of sealing a sample cell of an analytical rotor. It is to be understood that the present invention can be applied for sealing interfacing surfaces of other structural members that are subject to a component of a centrifugal force along the plane of the interface.

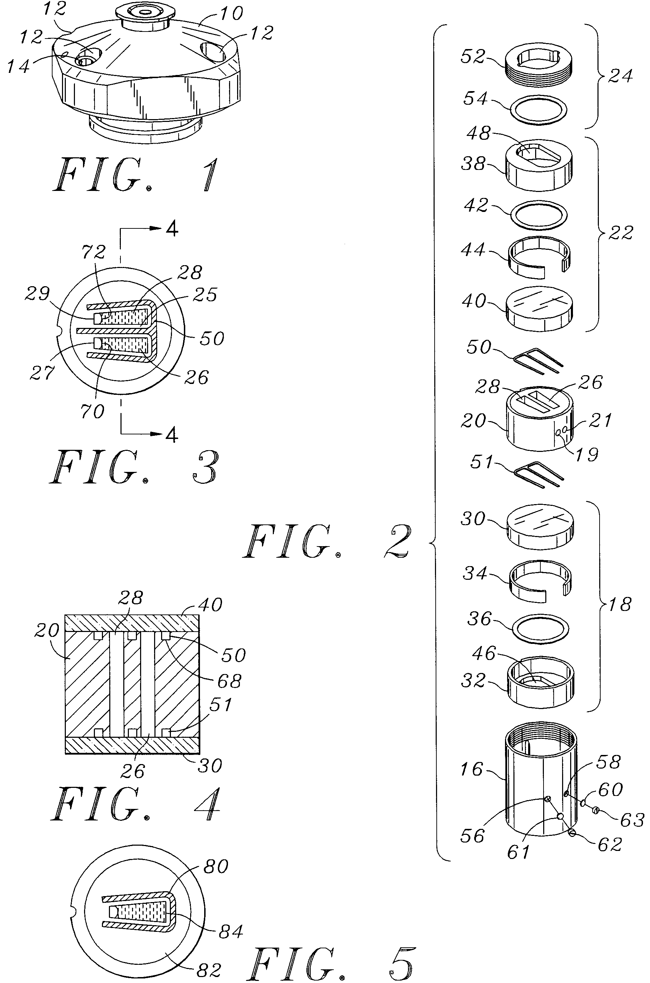

Referring to Fig. 1, an analytical rotor 10 for a centrifuge is mounted for rotation by a drive means (not shown) in order to subject samples to centrifugal forces. The rotor 10 has several cylindrical chambers 12 which have axes parallel to and equal distance from the axis of rotation of the rotor. Analytical rotors typically have 2, 4 or 6 chambers; the even number facilitates proper balancing of rotor loads. In the rotor 10 shown in Fig. 1, there are four diametrically opposite chambers wherein a sample cell assembly 14 is placed in one of a pair of diametrically opposite chambers and a suitable counter weight (not shown) is placed in the other chamber in the pair. The rotor 10 may be made of aluminum, titanium or composite material, depending on the stress consideration for the desired application and maximum rotation speed of the rotor.

Referring to Fig. 2, the sample cell assembly 14 includes a housing 16 which accommodates the various parts of the cell assembly including a lower window assembly 18, a centerpiece 20, an upper window assembly 22 and a screw ring assembly 24. The centerpiece 20 has at least one cavity defining a compartment 26 for containing a sample fluid, and in the example shown in Fig. 2, an additional cavity defining a compartment 28 for containing a reference material. The compartments 26 and 28 are separated by a wall 25 and are enclosed at the top and bottom by the window assemblies 18 and 22. Two openings 19 and 21 are provided on the side of the centerpiece 20 for access to the compartments 26 and 28. The centerpiece may be made of Epon (a registered trademark of Shell Chemical Corporation), Kel-F (a registered trademark of 3M Company) or aluminum. Centerpieces having different configurations and sizes of fluid compartments are commercially available from Beckman Instruments, Inc.

The lower window assembly 18 includes a transparent window 30 fitted into a lower window holder 32 with a circumferential window liner 34 and a window gasket 36. The upper window assembly 22 has similar parts, i.e. an upper window 38 fitted into an upper window holder 40 with a window gasket 42 and window liner 44. The windows may be uniform in thickness or may be wedge-shaped with varying thickness depending on the particular optical detection system used with the rotor. The windows typically are made of quartz or sapphire. The lower and upper window holders 32 and 38 each have an opening (46, 48) to allow optical visualization. A seal or gasket (50, 51) according to the present invention is provided between each window (30, 40) and the centerpiece 20 for sealing the fluid in the compartments 26 and 28. The gasket 50 and 51 will be described in greater detail below.

The upper window assembly 22, centerpiece 20 and lower window assembly 18 are assembled into the cylindrical cell housing 16 and secured by a screw ring assembly 24 including a screw ring 52 and a gasket 54. The cell housing 16 is provided with two plug openings 56 and 58 which extend to the openings 19 and 21 provided on the centerpiece 20 for fluid access of the compartments 26 and 28. Prior to centrifugation, the fluid compartments 26 and 28 are filled with the desired solution through the openings 19, 21, 26 and 28 in the housing 16 and centerpiece 20 which are then plugged with plugs 60 and 61 and gaskets 62 and 63. The sample cell assembly 14 is then inserted into one of the chambers 12 of the analytical rotor 10 which is then placed in an analytical centrifuge (not shown). The centrifuge would include a source of light and means for directing the light through the sample cell. The optical system used may be based on Schlieren effect, interference effect, absorption, etc. See for example, U.S. Patents No. 4,921,350; 4,919,537 and 3,807,874.

The gasket 50 for sealing the window 40 against the top surface of the centerpiece 20 will now be described. Referring to Fig. 3 which shows the top surface of the centerpiece 20, the section of each fluid compartment (26, 28) is tapered, with the narrow end (27, 29) of each positioned closer towards the spin axis of the rotor 10 upon assembly of the sample cell 14 in the rotor. A gasket 50 according to the present invention is provided between the window 40 and the top surface of the centerpiece 20 in a configuration shown in Fig. 3. Specifically, the gasket 50 is a strip of compliant material in a W-configuration which surrounds the longitudinal sides and the wide ends of the compartments 26 and 28. The narrow ends 27 and 29 of the compartments 26 and 28 are not surrounded by the gasket 50. The gasket 50 is made of a compliant material such as room temperature vulcanizing rubber. The density of the gasket material should be higher than that of the fluid being centrifuged. Specifically, a groove 68 is milled in the top surface of the centerpiece 20 which is filled with the compliant material to a level such that when it cures it is slightly above or flush with the top surface of the centerpiece 20. A similar gasket 51 is provided at the bottom surface of the centerpiece 20 for sealing against the bottom window 30. See Fig. 4.

Upon assembly of the cell holders 32 and 38 and tightening of the screw ring 52, the windows 30 and 40 are pressed against the centerpiece 20 to make an initial weak seal at the gaskets 50 and 51. It is noted that prior to centrifugation, there is minimal fluid pressure in the compartments 26 and 28 which would require only slight sealing pressure at the gaskets 50 and 51. Upon centrifugation, the fluids in the compartments move away from the spin axis of the rotor under centrifugal force thereby forming menisci 70 and 72. There will be a hydrostatic pressure gradient in the fluid in each compartment wherein the pressure increases away from the meniscus. It is noted that the menisci in some applications are intentionally formed at different heights, i.e. different radial distance from the spin axis, thereby causing a pressure differential between the two compartments. The pressure differential can cause leakage between compartments if a tight seal is not formed between wall 25 and the windows.

Referring to the top gasket 50 (the discussion below is also applicable to the bottom gasket 51), because the gasket 50 is 'open' near the narrow ends of the compartments, the longitudinal sections of the gasket is free to move radially outwards along the groove 68 under the centrifugal force. As a result, the gasket 50 is compressed longitudinally thereby causing it to laterally expand to press against the window 40 to form a tight seal. The length of each longitudinal sections of the gasket 50 is sized such that there will be sufficient material remaining to form a seal adjacent the menisci 70 and 72 upon centrifugation. The sealing pressure varies along the gasket in the radial direction due to a centrifugal force load gradient along the longitudinal sections of the gasket 50.

It can therefore be appreciated that a tighter seal is formed when the centrifugal force increases, and the sealing pressure increases along the same direction as the increase in hydrostatic pressure in the fluid compartments. The present invention therefore allows the gasket to form a fluid tight seal of which the sealing pressure which relies on the centrifugal force is commensurated with the hydrostatic pressure caused by the centrifugal force and the distribution of hydrostatic pressure. Less stringent tolerance requirement can be set for manufacturing the centerpiece and windows. In the event that the window 40 bows under the pressure of the screw ring 52 and gasket 42 and the hydrostatic pressure in the compartments 26 and 28, the center longitudinal section of the gasket 50 will laterally expand upon centrifugation to continue to maintain a seal between the wall 25 and the window 40. The gasket of the present invention will adjust accordingly to maintain the integrity of the seal depending on the magnitude of the centrifugal field.

For high pressure applications, a filler, for example titanium oxide, may be added in the compliant material to increase the density of the gasket so that it will more effectively react to centrifugal force to maintain a high pressure seal.

Fig. 5 shows a U-shaped gasket configuration 80 for use with a centerpiece 82 having only one compartment 84. A seal is formed as discussed above upon centrifugation.

While the invention has been described with respect to the embodiments in accordance therewith, it will be apparent to those skilled in the art that various modifications and improvements may be made without departing from the scope and spirit of the invention. For example, a preformed gasket may be used instead of setting room temperature vulcanizing rubber. The groove for the gasket may be provided in the window instead of the centerpiece. Accordingly, it is to be understood that the invention is not to be limited by the specific illustrated embodiments, but only by the scope of the appended claims.

## Claims

1. A fluid seal for sealing between interfacing surfaces of two structural members wherein the seal is subject to a component of a centrifugal force in the plane of the interfacing surfaces, the fluid seal comprising:

a strip of open-ended compliant member (50) disposed in a groove (68) formed on the interfacing surface of one of the structural members (20), the compliant member (50) being compressible longitudinally by and in the direction of the component of the centrifugal force thereby expanding laterally to increase the sealing pressure on the interfacing surfaces upon centrifugation.

2. A fluid seal according to claim 1 wherein the groove (68) is provided in a plane parallel to the radial direction of the centrifugal force.

3. A fluid seal according to claim 1 or 2 wherein the groove (68) is U-shaped.

4. A fluid seal according to claim 1, 2 or 3 wherein one of the structural members (20) is a centerpiece of a sample cell of an analytical centrifuge rotor (10) and the other structural member is a window covering the centerpiece.

5. A fluid seal according to any one of the preceding claims wherein the density of the compliant member (50) is higher than that of the fluid.

6. In a sample cell of an analytical rotor which comprises a centerpiece having at least one compartment with an opening for holding a sample fluid for centifugation and a window for covering the opening of the compartment, a seal for sealing the interfacing surfaces between the window and the centerpiece to prevent fluid leaks, the seal comprising:

   a strip of open-ended compliant member (50) disposed in a groove (68) formed on the interfacing surface of either the window or the centerpiece, the compliant member (50) being compressible longitudinally by and in the direction of a component of the centrifugal force thereby expanding laterally to increase the sealing pressure on the interfacing surfaces.

7. A sample cell according to claim 6 wherein the groove (68) is adjacent the opening of the compartment and in a substantially radial direction.

8. A sample cell according to claims 6 or 7 wherein the groove (68) is U-shaped in a plane in the direction of the component of the centrifugal force and surrounds the opening of the compartment.

9. A sample cell according to claim 6 wherein the centerpiece has two compartments, each having an opening, for holding sample fluids separated by a wall in a radial direction, and wherein the compliant member (50) comprises a section disposed along a groove between the wall and the window thereby preventing fluid leakage from one compartment to the other.

10. A sample cell according to any one of claims 6 to 9 wherein the compliant member (50) is W-shaped substantially surrounding the openings.

11. A sample cell according to any one of claims 6 to 10 wherein the density of the compliant member (50) is higher than that of the sample fluid.

*FIG. 1*

*FIG. 3*

*FIG. 2*

*FIG. 4*

*FIG. 5*